## Europäisches Patentamt

(19) **European Patent Office**

**Office européen des brevets**

(11) Veröffentlichungsnummer: **0 083 817**

**B1**

(12) # EUROPÄISCHE PATENTSCHRIFT

(45) Veröffentlichungstag der Patentschrift:
03.02.88

(21) Anmeldenummer: 82201647.3

(22) Anmeldetag: 21.12.82

(51) Int. Cl.⁴: **G 01 B 5/02,** G 01 B 5/08, G 01 B 5/12

(54) Einrichtung zum Messen von Abständen insbesondere von Gewinde-Durchmessern.

(30) Priorität: 08.01.82 DE 3200695

(43) Veröffentlichungstag der Anmeldung:
20.07.83 Patentblatt 83/29

(45) Bekanntmachung des Hinweises auf die Patenterteilung:
03.02.88 Patentblatt 88/5

(84) Benannte Vertragsstaaten:
CH DE FR GB IT LI SE

(56) Entgegenhaltungen:
FR-A-484 006
GB-A-1 130 016
GB-A-2 012 424
US-A-2 372 879

(73) Patentinhaber: TRIMOS S.A., 3, rue Centrale, CH-1022 Chavannes- Renens (CH)

(72) Erfinder: Marveggio, Secondo, 5, chemin des Fleurs, CH- 1007 Lausanne (CH)

(74) Vertreter: Ardin, Pierre, PIERRE ARDIN & CIE 22, rue du Mont- Blanc Case postale 60, CH- 1211 Genève 1 (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zum Messen von Abständen an einem zu messenden Gegenstand, insbesondere von Gewinde-Durchmessern. Bekannte Einrichtungen bestehen aus einem Träger zur Aufnahme des Messobjektes, zwei an diesem Träger befestigten Messbacken, und zwei von je einem dieser Messbacken getragene Tastbolzen mit Messeinsätzen, wobei mindestens einer der Messbacken zur Messung gegenüber dem Träger in einer der Messrichtung entsprechenden Richtung beweglich angeordnet ist.

Diese Messeinrichtungen haben den Nachteil, dass beim Messen von Gegenständen mit unebener Oberfläche, insbesondere Gewinde-Durchmessern, die Tastbolzen nur nach längerem Einstellen des Messgegenstandes in die richtige Messlage gebracht werden können. Die Einstellung der Tastorgane in die ideale Messlage ist daher nicht immer möglich, wodurch Präzisionsfehler in der Messung auftreten können.

Die Erfindung hat zum Ziel, die genannten Nachteile zu beheben. Sie ist zu diesem Zweck dadurch gekennzeichnet, dass die Tastbolzen in den Messbacken senkrecht zur besagten Messrichtung beweglich gelagert sind, dass die Messbacken mit zur Führung der Tastbolzen in eine ungefähre Messlage dienenden Verstellorganen ausgerüstet sind, und dass diese Verstellorgane über Federglieder derart mit den Tastbolzen gekuppelt sind, dass sie bei einer Messung ein Einstellungsspiel der Messeinsätze in die korrekte Messlage entgegen der Federkraft der Federglieder erlauben.

Die Einrichtung erlaubt ein nach erfolgter Grobeinstellung automatisches Einspielen der Tastorgane in die ideale Messlage und trägt so entscheidend zur Erleichterung des Messens insbesondere von Gewindedurchmessern bei.

Nachstehend ist die Erfindung anhand eines Ausführungsbeispieles beschrieben. Es bedeuten:

Fig. 1 eine Ansicht der Erfindung, teilweise geschnitten,

Fig. 2 einen Schnitt durch die Fig. 1, längs der Ebene A-A,

Fig. 3 einen Schnitt durch Fig. 1, längs der Ebene B-B.

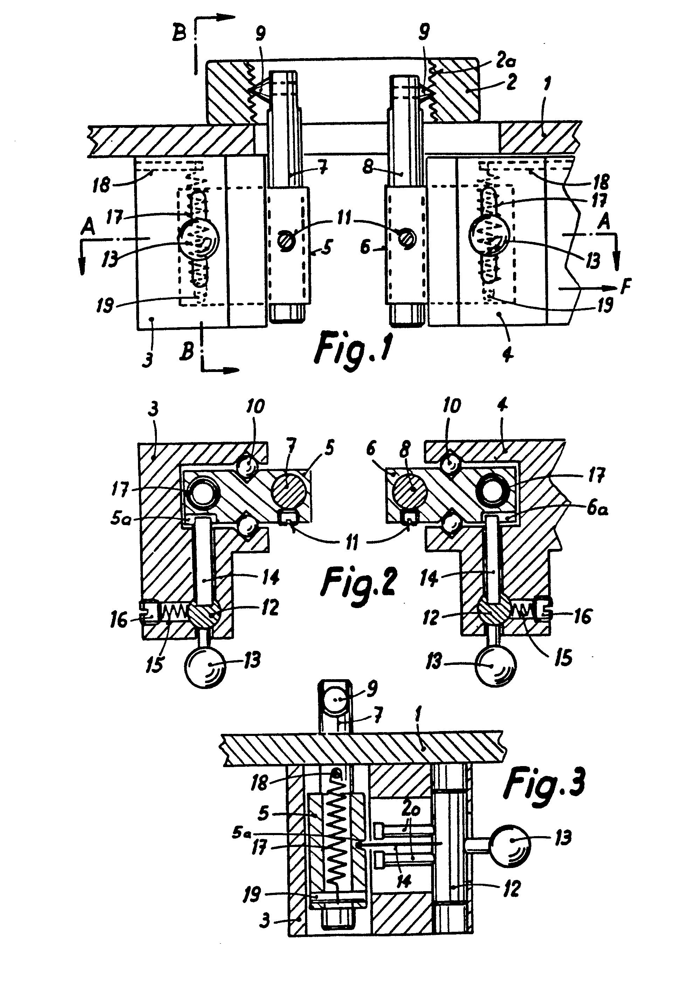

Auf einem Träger 1 (Fig. 1) ruht das Messobjekt 2, in diesem Fall ein mit einem Innengewinde 2a versehener Ring 2. Zwei Tastbolzen 7 und 8 greifen mit ihren Messeinsätzen 9 in bekannter Art in daß zu messende Gewinde 2a ein. Sie sind in der Höhe verstellbar in Schlitten 5 und 6 gelagert und werden in diesen mittels Schrauben 11 festgehalten. Über Kugelführungen 10 sind die Schlitten 5 und 6 in den Messbacken 3 und 4 senkrecht zur Messrichtung beweglich geführt. In den Messbacken 3 und 4 befinden sich mit Griffen 13 versehene Bolzen 12, (Fig. 2 und 3), welche mit Blattfedern 14 ausgerüstet sind. Diese Federn 14 greifen mit ihren Enden in Aussparungen 5a und 6a der Schlitten 5 und 6 ein. In den Bolzen 12 eingelassene Anschläge 20 (Fig. 3) begrenzen den Hub der Federn und schützen diese dadurch vor Überlastung.

Nach Verstellen der Bolzen 12 durch die Griffe 13 werden die Bolzen durch die Kraft der Federn 15 (Fig. 2), die durch Schrauben 16 einstellbar sind, in ihrer Lage festgehalten.

Federn 17 (Fig. 1 und 3), einerseits an Bolzen 18 der Messbacken 3 und 4 angreifend anderseits an Bolzen 19 der Schlitten 5 und 6 befestigt, sorgen dafür, dass das Gewicht von Schlitten 5, 6 und Tastbolzen 7, 8 annähernd aufgehoben wird.

Der Messbacken 3 ist mit dem Träger 1 fest verbunden, während der Messbacken 4 in Messrichtung beweglich gelagert ist. In bekannter Weise ist der Messbacken 4 mit einer nicht dargestellten Messeinrichtung gekuppelt, welche das Mass ihrer Verschiebung anzeigt.

Die Messung selbst geschieht dadurch, dass, nach Rückzug des Messbackens 4 (nach links in Fig. 1) das Messobjekt 2 auf den Träger 1 aufgelegt wird. Die Tastbolzen 7 und 8 können nun, nach Lösen und wieder Anziehen der Schrauben 11, grob in der Höhe eingestellt werden. Eine feinere Einstellung erfolgt nun mittels der beiden Griffe 13, welche den Schlitten 5 und 6 soviel freien Spielraum gestatten, wie die Federn 14 erlauben. Wird nun durch Verstellen der Messbacken 4 in die Messtellung eingefahren und mit einer Messkraft F beaufschlagt, so können sich die Schlitten 5 und 6 und mit ihnen die Messeinsätze 9 innerhalb des Spielraumes der Federn 14 frei in die Gänge des Gewindes 2a einspielen. Damit sind die idealen Voraussetzungen für eine korrekte Messung des Gewinde-Durchmessers gegeben.

Das aufgeführte Beispiel zeigt das Messen von Innengewinden. Durch entsprechende Wahl der Messeinsätze können natürlich auch Aussengewinde in sinnentsprechender Art gemessen werden. Desgleichen ist das Ausmessen von Durchmessern aller Art, wie zum Beispiel derjenigen von Einstichen, möglich.

## Patentansprüche

1. Einrichtung zum Messen von Abständen an einem zu messenden Gegenstand, bestehend aus einem Träger zur Aufnahme des Messgegenstandes, zwei an diesem Träger befestigten Messbacken, und zwei von je einem dieser Messbacken getragene Tastbolzen mit Messeinsätzen, wobei mindestens einer der Messbacken zur Messung gegenüber dem Träger in einer der Messrichtung entsprechenden Richtung beweglich angeordnet ist, dadurch gekennzeichnet, dass die Tastbolzen (7, 8) in den Messbacken (3, 4) senkrecht zur besagten Messrichtung beweglich gelagert sind, dass die Messbacken (3, 4) mit zur Führung der Tastbolzen (7, 8) in eine ungefähre Messlage dienenden Verstellorganen (12, 13) ausgerüstet sind, und dass diese Verstellorgane (12, 13) über Federglieder (14) derart mit den Tastbolzen (7, 8) gekuppelt sind, dass sie bei einer Messung ein Einstellungsspiel der Messeinsätze (9) in die korrekte Messlage entgegen der Federkraft der Federglieder (14) erlauben.

2. Einrichtung zum Messen von Abständen, nach Anspruch 1, dadurch gekennzeichnet, dass die Tastbolzen (7, 8) über Wälzführungen (10) in den Messbacken (3, 4) gelagert sind.

3. Einrichtung zum Messen von Abständen, nach Ansprüchen 1 und 2, dadurch gekennzeichnet, dass die Tastbolzen (7, 8) längsverstellbar in Schlitten (5, 6) aufgenommen sind, welche ihrerseits in den Messbacken (3, 4) beweglich gelagert sind.

4. Einrichtung zum Messen von Abständen, nach Ansprüchen 1 bis 3, dadurch gekennzeichnet, dass die in den Messbacken (3, 4) gelagerten Verstellorgane (12, 13) derart gebremst sind, dass sie in der eingestellten Lage festgehalten werden.

5. Einrichtung zum Messen von Abständen, nach Ansprüchen 3 und 4, dadurch gekennzeichnet, dass das Gewicht der Tastbolzen (7, 8) und der mit ihnen verbundenen Schlitten (5, 6) durch entsprechend angeordnete Federn (17) aufgehoben wird.

## Claims

1. Device for measuring distances on an object to be measured, comprising a carrier for receiving the object to be measured, two measuring support members attached to said carrier and two measuring pins with measuring inserts, each carried by one of said measuring support members, at least one of the measuring support members being, for measurement purposes, movably mounted relative to the carrier in a direction corresponding to the measurement direction, characterized in that the measuring pins (7, 8) are positioned to move perpendicular with respect to said measurement direction in the measuring support members (3, 4), the measuring support members (3, 4) being provided with adjusting members (12, 13) serving to guide the measuring pins (7, 8) into an approximate measurement position, the adjusting members (12, 13) being coupled by means of spring members (14) with the measuring pins (7, 8) so that, during a measurement operation, they permit an adjustment leeway of the measuring inserts (9) into the correct measuring position against the spring force of the spring members (14).

2. Device for measuring distances according to claim 1, characterized in that the measuring pins (7, 8) are positioned in the measuring support members (3, 4) by means of roller guides (10).

3. Device for measuring distances according to claims 1 and 2, characterized in that the measuring pins (7, 8) are mounted in a longitudinally adjustable manner on sliding carriages (5, 6) which in turn are movably positioned in the measuring support members (3, 4).

4. Device for measuring distances according to claims 1 to 3, characterized in that the adjusting members (12, 13), positioned in measuring support members (3, 4), are braked so that they will be retained in the adjusted position.

5. Device for measuring distances according to claims 3 and 4, characterized in that the weight of the measuring pins (7, 8) and of the sliding carriages (5, 6) connected with them is balanced out by correspondingly arranged springs (17).

## Revendications

1. Dispositif pour la mesure de distances sur un objet à mesurer comprenant un support pour porter l'objet à mesurer, deux plaques de mesure fixées à ce support et deux palpeurs avec des garnitures de mesure, chacun porté par une des plaques de mesure, au moins une des plaques de mesure étant arrangée pour la mesure de façon mobile par rapport au support suivant une direction correspondant à la direction de mesure, caractérise en ce que les palpeurs (7, 8) sont montés de façon mobile sur les plaques de mesure (3, 4) suivant une direction perpendiculaire à la direction de mesure, en ce que les plaques de mesure (3, 4) sont munies d'organes de réglage (12, 13) destinés à amener les palpeurs (7, 8) dans une position de mesure approximative et en ce que ces organes de réglage (12, 13) sont accouplés aux palpeurs (7, 8) par l'intermédiaire d'éléments à ressort (14), de façon qu'ils permettent, lors de la mesure, un battement de réglage des garnitures de mesure (9) dans la position de mesure correcte contre l'action élastique des éléments de ressort (14).

2. Dispositif pour la mesure de distances selon la revendication 1, caractérisé en ce que les palpeurs (7, 8) sont montés sur les plaques de mesure (3, 4) par l'intermédiaire de roulements (10).

3. Dispositif pour la mesure de distances selon les revendications 1 et 2, caractérisé en ce que les palpeurs (7, 8) sont montés de façon ajustable longitudinalement dans des chariots (5, 6), qui sont eux-mêmes montés de façon mobile dans les plaques de mesure (3, 4).

4. Dispositif pour la mesure de distances selon les revendications 1 à 3, caractérisé en ce que les organes de réglage (12, 13) montés dans les plaques de mesure (3, 4) sont freinés de façon qu'ils sont maintenus dans la position ajustée.

5. Dispositif pour la mesure de distances selon les revendications 3 et 4, caractérisé en ce que le poids des palpeurs (7, 8) et des chariots (5, 6) reliés à ces derniers est compensé par des ressorts (17) disposés de façon adéquate.

Fig.1

Fig.2

Fig.3